(19) Europäisches Patentamt
European Patent Office
Office européen des brevets

(11) **EP 1 672 391 B1**

(12) **EUROPÄISCHE PATENTSCHRIFT**

(45) Veröffentlichungstag und Bekanntmachung des Hinweises auf die Patenterteilung:
**16.09.2009 Patentblatt 2009/38**

(51) Int Cl.:
**G01S 17/10** (2006.01)     **G01S 7/487** (2006.01)

(21) Anmeldenummer: **05111400.7**

(22) Anmeldetag: **29.11.2005**

(54) **Laserdistanzhandmessgerät mit einem Impulsrückmischverfahren**

Handheld laser distance measuring device using an impulse back-mixing method

Dispositif de mesure manuel de distance au laser avec un procédé de rétromélange par impulsion

(84) Benannte Vertragsstaaten:
**AT CH DE FR GB IT LI**

(30) Priorität: **16.12.2004 DE 102004060619**

(43) Veröffentlichungstag der Anmeldung:
**21.06.2006 Patentblatt 2006/25**

(73) Patentinhaber:
- **HILTI Aktiengesellschaft**
  **9494 Schaan (LI)**
- **JENOPTIK Laser, Optik, Systeme GmbH**
  **07745 Jena (DE)**

(72) Erfinder:
- **Gogolla, Torsten**
  **9494 Schaan (LI)**

- **Winter, Andreas**
  **6830 Rankweil (AT)**
- **Seifert, Helmut**
  **07616 Serba (DE)**

(74) Vertreter: **Wildi, Roland**
**Hilti Aktiengesellschaft,**
**Corporate Intellectual Property**
**Feldkircherstrasse 100**
**Postfach 333**
**9494 Schaan (LI)**

(56) Entgegenhaltungen:
EP-A- 0 022 747     EP-A2- 0 610 918
DE-A1- 3 103 567     DE-C1- 10 112 833
US-B1- 6 252 655

**Beschreibung**

Die Erfindung bezeichnet ein Laserdistanzhandmessgerät mit einem Impulsrückmischverfahren, insbesondere ein Baulaserdistanzhandmessgerät.

Im Baugewerbe ist im Entfernungsbereich bis zu einigen 100m die exakte Bestimmung der Distanz mit einer Genauigkeit von wenigen mm erforderlich. Die dazu geeignet ausgebildeten Laserdistanzhandmessgeräte, auf welche sich diese Erfindung bezieht, verwenden zur Distanzmessung ein Impulsrückmischverfahren eines modulierten sichtbaren Laserstrahls.

Bei der EP610918B1 wird zur Distanzmessung eine kurze Impulsfolge verwendet, die nach Detektion einen auf die Impulsfolgefrequenz abgestimmten elektronischen Resonator anregt. Das überhöhte Signal des Resonators initiiert einen Laser, eine neue Impulsfolge auszusenden. Dieser Vorgang wird ständig wiederholt, so dass Impulsumläufe mit einer bestimmten Umlauffrequenz entstehen. Aus dieser Umlauffrequenz resultiert die Messdistanz.

In der DE3103567C2 wird ein Verfahren zur direkten Lichtimpulslaufzeitmessung vorgestellt, bei dem sowohl ein über die Messstrecke laufender Messlichtimpuls als auch ein über die Referenzstrecke laufender Referenzlichtimpuls von einem gemeinsamen Fotodetektor detektiert werden. Der detektierte Mess- und Referenzlichtimpuls startet bzw. stoppt ein Zeitmesssystem, also z.B. einen schnellen Zähler. Durch direkte und eindeutige Messung der Zeitdifferenz zwischen der Detektion des Referenzlichtimpulses und der Detektion des Messlichtimpulses wird die Messdistanz eindeutig ermittelt. Die maximale Wiederholfrequenz der Lichtimpulse ist also durch die Bedingung der eindeutigen Distanzbestimmung begrenzt. Der Nachteil ist jedoch der, dass bei Messdistanzen, die der halben Referenzstrecke entsprechen, keine Messung möglich ist, weil sich beide Impulse überlappen. Dieses Problem lässt sich dadurch lösen, dass eine umschaltbare Referenzstrecke in Form einer Lichtleitfaser verwendet wird, so dass bei einer Impulsüberlappung eine andere Referenzdistanz ausgewählt wird.

Nach der DE10112833C1 ist ein Laserdistanzhandmessgerät mit einem Impulsrückmischverfahren bekannt. Die vom Lichtdetektor erfasste Detektionsimpulsfolge bzw. bei getrennten Lichtdetektoren, die Referenzimpulsfolge einerseits und die Messimpulsfolge andererseits werden vorzugsweise im jeweiligen Lichtdetektor unmittelbar einer Direktmischung mit anschließender Tiefpassfilterung unterworfen, wobei die Direktmischung unter Steuerung durch eine am Messort lokal erzeugte LO-Impulsfolge erfolgt, deren Tastverhältnis gleich oder annähernd gleich dem Tastverhältnis der Messimpulsfolge und deren Wiederholfrequenzen geringfügig verschieden gewählt sind. Die Mischimpulswiederholfrequenz $f_M$ der niederfrequenten Mischimpulsfolge entspricht demnach dem Betrag der Differenz zwischen der Impulswiederholfrequenz f der Sende- bzw. Messimpulsfolge und der Impulswiederholfrequenz der Lokalozillatorimpulsfolge $f_{LO}$. Es gilt also: $f_M = |f - f_{LO}|$. Die niederfrequente Mischimpulsfolge besteht wie die hochfrequente Detektionsimpulsfolge aus Referenz- und Messimpulsen, deren Zeitversatz ein Mass für die Distanz ist. Bezüglich näherer Einzelheiten dazu wird der Fachmann auf dieses Dokument verwiesen.

Bei derartigen Impuls-Rückmisch-Laserdistanzhandmessgeräten mit einem Impulsrückmischverfahren werden als Laserquellen handelsübliche Laserdioden verwendet, die im sichtbaren roten Wellenlängenbereich emittieren. Das emittierte Laserlicht wird mit einer Folge von sehr schmalen Nadelimpulsen - im Folgenden Sendeimpulsfolge genannt - moduliert und mit einer Kollimatorlinse zu einem Messlaserstrahl gebündelt. Dieses spezielle Impuls-Rückmisch-Laserdistanzhandmessgerät erfordert somit als Sendeimpulsfolge eine Folge von sehr schmalen Laserimpulsen mit einer Breite üblicherweise zwischen 60 ps und 80 ps. Die Impulswiederholfrequenz f der Laserimpulse im Bereich von 50 MHz bis 200 MHz ist im Vergleich zu der Impulswiederholfrequenz von einigen 10 kHz bei herkömmlichen Impuls-Laserdistanzhandmessgeräten sehr hoch, so dass bei einer bestimmt festen Impulswiederholfrequenz im Allgemeinen mit einer Messung keine eindeutige Distanzbestimmung im Entfernungsbereich bis zu einigen 100m möglich ist. Somit sind für eine eindeutige Distanzbestimmung mindestens zwei Messungen bei zwei wesentlich verschiedenen Impulswiederholfrequenzen bzw. Differenzen aus Impulswiederholfrequenzen $f_1$ und $f_2$ notwendig, für sehr grosse Entfernungsbereiche mit hoher Genauigkeit sogar n verschiedene. Der Mikrocontroller bestimmt mittels eines Algorithmus die im Allgemeinen nicht eindeutigen Zeitdifferenzen $T_k$ zwischen den Referenz- und den Messimpulsen der niederfrequenten Mischimpulsfolge bei unterschiedlichen Impulswiederholfrequenzen $f_k$ und daraus mit Hilfe der Lichtgeschwindigkeit die Distanz vom Distanzmesser zum Leuchtfleck auf dem Messobjekt. Bei bestimmten Distanzen mit einer Zeitdifferenz $T_k$ = 0 kommt es aufgrund einer endlichen Impulsbreite $\Delta t$ zu einer Überlappung des Referenzimpulses mit dem Messimpuls. Da somit keine Messung möglich ist, wählt der Mikrocontroller in diesem Fall eine geringfügig andere Impulswiederholfrequenz $f_{ki}$, bei der keine Impulsüberlappung auftritt. Nachteilig ist, dass auch bei einem kleinen $T_k$ mit einem erhöhten Distanzmessfehler zu rechnen ist, weil beide Impulse sich aufgrund ihres geringen Abstands gegenseitig beeinflussen.

Im Folgenden wird die auf die Periodendauer $1/f_k$ bezogene Zeitdifferenz zwischen einem Referenz- und einem Messimpuls als relative Zeitdifferenz $T_k \cdot f_k$ und die auf die Periodendauer $1/f_k$ bezogene Impulsbreite als relative Impulsbreite $\Delta t \cdot f_k$ bezeichnet.

Die Aufgabe der Erfindung besteht in einer Realisierung eines Impuls-Rückmisch-Laserdistanzhandmessgeräts mit erhöhter Distanzmessgenauigkeit. Ein weiterer Aspekt besteht in einem Algorithmus zur Generierung bezüglich der Distanzmessgenauigkeit optimaler Impulswiederholfrequenzen.

Die Aufgabe wird im Wesentlichen durch die Merkmale des Anspruchs 1 gelöst. Vorteilhafte Weiterbildungen ergeben sich aus den Unteransprüchen.

So weist ein Impuls-Rückmisch-Laserdistanzhandmessgerät mit einem, einen Mikrocontroller steuernden, Algorithmus zur Berechnung der Distanz zu einem Messobjekt über zumindest zwei verschiedene, mit je einer Impulswiederholfrequenz $f_1$, $f_2$ gemessene, Zeitdifferenzen $T_1$, $T_2$ zwischen einem Messimpuls und einem Referenzimpuls ein Auswahlmodul auf, welches zumindest die erste Impulswiederholfrequenz $f_1$ derart aus zumindest einer ersten Frequenzmenge $\{f\}_1$ mit zumindest einer weiteren Impulswiederholfrequenz $f_{1i}$ auswählt, dass der Betrag der auf die Periodendauer $1/f_1$ bezogenen relativen Zeitdifferenz $|T_1 \cdot f_1|$ zwischen einem Referenz- und einem Messimpuls grösser ist als die doppelte auf die Periodendauer bezogene relative Impulsbreite $|\Delta t\, f_1|$.

Das zugeordnete Messverfahren weist im Schritt vor der Berechnung der Distanz aus den zumindest zwei Zeitdifferenzen $T_1$, $T_2$ nach der Messung zumindest zweier, mit verschiedenen Impulswiederholfrequenzen $f_1$, $f_2$ gemessen Zeitdifferenzen $T_1$, $T_2$ einen Auswahlschritt auf, welcher zumindest die erste Impulswiederholfrequenz $f_1$ derart aus zumindest einer ersten Frequenzmenge $\{f\}_1$ mit zumindest einer weiteren Impulswiederholfrequenz $f_{1i}$ auswählt, dass der Betrag der auf die Periodendauer $1/f_1$ bezogenen relativen Zeitdifferenz $|T_1 \cdot f_1|$ zwischen einem Referenz- und einem Messimpuls grösser ist als die doppelte auf die Periodendauer bezogene relative Impulsbreite $|\Delta t\, f_1|$.

Durch die Auswahl einer hinreichend geeigneten Impulswiederholfrequenz wird die gegenseitige Beeinflussung des Messimpulses mit dem Referenzimpuls auf ein Minimum reduziert, da sich Störungen wie Nachschwinger bei hinreichend grossem Abstand zwischen dem Messimpulses und dem Referenzimpuls weniger stark auswirken. Die Distanzmessgenauigkeit wird somit erheblich verbessert.

Vorteilhaft ist die zweite Impulswiederholfrequenz $f_2$ derart aus zumindest einer zweiten Frequenzmenge $\{f\}_2$ mit zumindest einer weiteren Impulswiederholfrequenz $f_{2i}$ ausgewählt, dass der Betrag der auf die Periodendauer $1/f_2$ bezogenen relativen Zeitdifferenz $|T_2 \cdot f_2|$ zwischen einem Referenz- und einem Messimpuls grösser ist als die doppelte auf die Periodendauer bezogene relative Impulsbreite $|\Delta t\, f_2|$, wodurch die gegenseitige Beeinflussungen bei beiden zur Berechnung notwendigen Zeitdifferenzen reduziert werden.

Vorteilhaft ist bei einer zur Berechnung der Distanz benutzten Anzahl n von Impulswiederholfrequenzen $f_1 ... f_n$ je eine Impulswiederholfrequenz $f_k$ mit $k <= n$ derart aus zumindest einer weiteren Frequenzmenge $\{f\}_k$ mit zumindest einer weiteren Impulswiederholfrequenz $f_{ki}$ ausgewählt, dass der Betrag der auf die Periodendauer $1/f_k$ bezogenen relativen Zeitdifferenz $|T_k \cdot f_k|$ zwischen einem Referenz- und einem Messimpuls grösser ist als die doppelte auf die Periodendauer bezogene relative Impulsbreite $|\Delta t\, f_k|$, wodurch bei allen zur Berechnung grosser Distanzen mit hoher Genauigkeit notwendigen Zeitdifferenzen die gegenseitigen Beeinflussungen reduziert und somit die Messsicherheit erhöht wird.

Vorteilhaft wird zumindest eine, weiter vorteilhaft werden alle Impulswiederholfrequenzen $f_k$ derart ausgewählt, dass zudem der Betrag $|T_k \cdot f_k - 1/2|$ minimal ist, wodurch optimale Impulswiederholfrequenzen $f_k$ zur Berechnung verwendet werden.

Vorteilhaft sind in der Frequenzmenge $\{f\}_k$ die einzelnen Impulswiederholfrequenzen $f_{ki}$ einzelne Glieder einer geometrischen Reihe mit einem Reihenindex i, d.h. bspw. von einer Bezugsfrequenz $f_{0k}$ abgeleitete Teilfrequenzen $f_{0k}/4, f_{0k}/5, f_{0k}/6, ... f_{0k}/i$, wodurch bei der Messfolge mit steigendem Reihenindex i eine starke Konvergenz zu einer zulässigen Zeitdifferenz $T_{ki}$ gegeben ist.

Vorteilhaft ist die untere Schranke A zur Auswahl der Impulswiederholfrequenz grösser als die fünffache relative Impulsbreite, wodurch wegen des hinreichend grossen Impulsabstands stets eine hinreichend hohe Distanzmessgenauigkeit gegeben ist.

Die Erfindung wird bezüglich eines vorteilhaften Ausführungsbeispiels näher erläutert mit:

Fig. 1 als Laserdistanzhandmessgerät mit Algorithmus

Fig. 2 als Impulsfolge im normierten Zeitmassstab

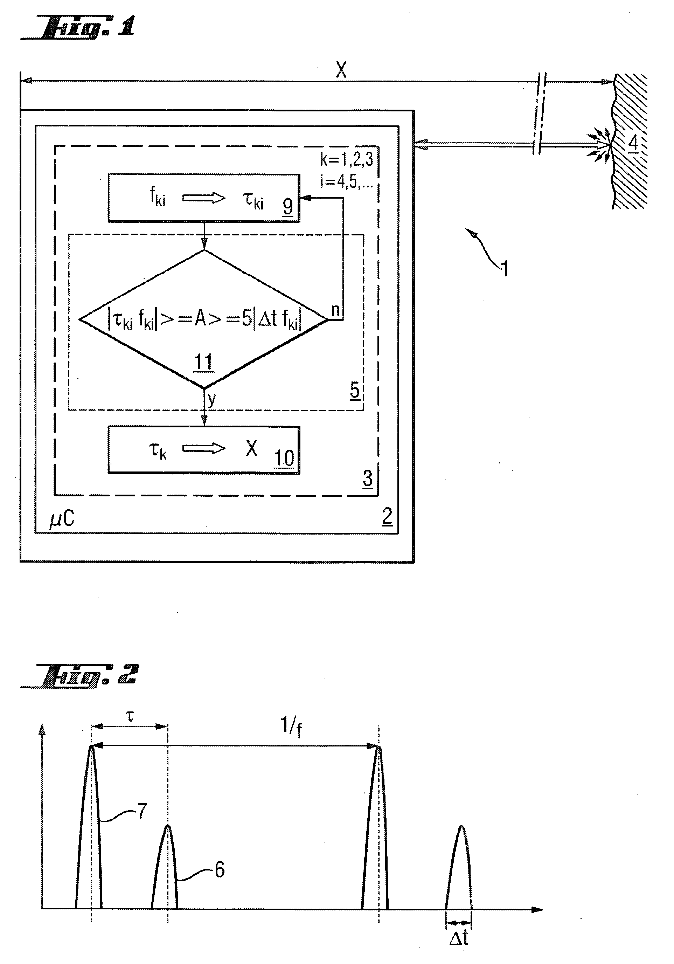

Nach den Fig. 1 und Fig. 2 weist ein nur schematisch angedeutetes Impuls-Rückmisch-Laserdistanzhandmessgerät 1 einen, einen Mikrocontroller 2 steuernden, Algorithmus 3 zur Berechnung der Distanz X zu einem Messobjekt 4 auf. In diesem Algorithmus 3 erfolgt mit einem Messschritt 9 die Messung dreier, mit wesentlich verschiedenen Impulswiederholfrequenzen $f_1$, $f_2$, $f_3$ gemessen Zeitdifferenzen $T_1$, $T_2$, $T_3$ zwischen einem Messimpuls 6 und einem Referenzimpuls 7, wobei $k = 1, 2, 3$ der Bereichsindex ist. In einem späteren Berechnungsschritt 10 erfolgt aus den drei Zeitdifferenzen $T_1$, $T_2$, $T_3$ die Berechnung der Distanz X. In einem zwischen dem Messschritt 9 und dem Berechnungsschritt 10 liegenden Auswahlschritt 11 eines Auswahlmoduls 5 des Algorithmus 3 werden genau die drei verschiedenen, mit je einer Impulswiederholfrequenz $f_1$, $f_2$, $f_3$ gemessenen, Zeitdifferenzen $T_1$, $T_2$, $T_3$ jeweils derart aus jeweils einer getesteten Testreihe einer Frequenzmenge $\{f\}_1$, $\{f\}_2$ und $\{f\}_3$ auswählt, dass die Beträge $|T_1 \cdot f_1 - 1/2|$, $|T_2 \cdot f_2 - 1/2|$ und $|T_3 \cdot f_3 - 1/2|$ jeweils minimal sind, d.h. der normierte Abstand zwischen dem Messimpuls 6 und dem Referenzimpuls 7 jeweils maximal ist. Die Frequenzmengen

$$\{f\}1 = \{\ 400/4\ \text{MHZ},\ 400/5\ \text{MHZ},\ 400/6\ \text{MHZ},\ ...\} = \{\ f_{01}/i\ \},$$

$$\{f\}2 = \{\ 40/4\ \text{MHZ},\ 40/5\ \text{MHZ},\ 40/6\ \text{MHZ},\ ...\} = \{\ f_{02}/i\ \}\ \text{und}$$

und

$$\{f\}3 = \{\ 4/4\ \text{MHZ},\ 4/5\ \text{MHZ},\ 4/6\ \text{MHZ},\ ...\} = \{\ f_{03}/i\ \}$$

beinhalten jeweils einzelne Impulswiederholfrequenzen $f_{ki}$, die einzelne Glieder einer harmonischen Folge Reihe mit einem Folgenindex i = 4, 5, 6, ... darstellen, welche von jeweils einer Bezugsfrequenz $f_{01}$ = 400 MHz, $f_{02}$ = 40 MHz und $f_{03}$ = 4 MHz als i-te Teilfrequenzen abgeleitet wurden. Mit der Abbruchbedingung der Testreihe getesteter Impulswiederholfrequenzen $f_{ki}$ je Frequenzmenge $\{f\}_k$ bei einer zulässigen relativen Zeitdifferenz $| T_{ki}\,f_{ki} | >= A >= 5\,|\Delta t\,f_{ki}|$ beinhaltet das Auswahlmodul 5 zudem eine untere Schranke die dem fünffachen der auf die Periodendauer $(1/f_k)$ bezogenen relativen Impulsbreite $|\Delta t \cdot f_{ki}|$ entspricht zur Berechnung der Distanz X. Dabei genügt je Frequenzmenge $\{f\}_k$ die erste, obige Abbruchbedingung erfüllende, Impulswiederholfrequenz $f_k$ automatisch der Bedingung, dass der Betrag $|T_k \cdot f_k - 1/2|$ minimal ist bezüglich aller getesteten Impulswiederholfrequenzen $f_{ki}$ der Testreihe.

**Patentansprüche**

1. Laserdistanzhandmessgerät mit einem, einen Mikrocontroller (2) steuernden, Algorithmus (3) zur Berechnung der Distanz (X) zu einem Messobjekt (4) über zumindest zwei verschiedene, mit je einer Impulswiederholfrequenz ($f_1$, $f_2$) gemessene. Zeitdifferenzen ($\tau_1$, $\tau_2$) zwischen einem Messimpuls (6) und einem Referenzimpuls (7) mit einer Impulsbreite ($\Delta t$), wobei durch direkte und eindeutige Messung der Zeitdifferenz ($\tau_1,\tau_2$) zwischen der Detektion des Referenzimpulses (7) und der Detektion des Messimpulses (6) die Distanz (X) eindeutig ermittelt wird, **dadurch gekennzeichnet, dass** ein Auswahlmodul (5) vorhanden ist, welches zumindest die erste Impulswiederholfrequenz ($f_1$) derart aus einer getesteten Testreihe zumindest einer ersten Frequenzmenge ($\{f\}_1$) mit zumindest einer weiteren Impulswiederholfrequenz ($f_{1i}$) auswählt, dass der Betrag der auf die Periodendauer $(1/f_1)$ bezogenen relativen Zeitdifferenz $|\tau_1 \cdot f_1|$ zwischen dem Referenzimpuls (7) und dem Messimpuls (6) grösser ist als die doppelte auf die Periodendauer $(1/f_1)$ bezogene relative Impulsbreite $|\Delta t\ f_1|$.

2. Impulsrückmischverfahren für ein Laserdistanzhandmessgerät (1) zur Berechnung der Distanz (X) zu einem Messobjekt (4) mit einem, von einem Mikrocontroller (2) gesteuerten, Algorithmus (3) mit einem Messschritt (9) zur Messung zumindest zweier, mit verschiedenen Impulswiederholfrequenzen ($f_1$, $f_2$) gemessen Zeitdifferenzen ($\tau_1$, $\tau_2$) zwischen einem Messimpuls (6) und einem Referenzimpuls (7) mit einer Impulsbreite ($\Delta t$) und einem späteren Berechnungsschritt (10) zur Berechnung der Distanz (X) aus den zumindest zwei Zeitdifferenzen ($\tau_1$, $\tau_2$), wobei durch direkte und eindeutige Messung der Zeitdifferenz ($\tau_1,\tau_2$) zwischen der Detektion des Referenzimpulses (7) und der Detektion des Messimpulses (6) die Distanz (X) eindeutig ermittelt. wird, **dadurch gekennzeichnet, dass** in einem zwischen dem Messschritt (9) und dem Berechnungsschritt (10) liegenden Auswahlschritt (11) eines Auswahlmoduls (5) zumindest die erste Impulswiederholfrequenz ($f_1$) derart aus einer getesteten Testreihe zumindest einer ersten Frequenzmenge ($\{f\}_1$) mit zumindest einer.weiteren Impulswiederholfrequenz ($f_{1i}$) ausgewählt wird, dass der Betrag der auf die Periodendauer $(1/f_1)$ bezogenen relativen Zeitdifferenz $|\tau_1 \cdot f_1|$ zwischen dem Referenzimpuls (7) und dem Messimpuls (6) grösser ist als die doppelte auf die Periodendauer $(1/f_1)$ bezogene relative Impulsbreite $|\Delta t\ f_1|$.

3. Algorithmus nach Anspruch 2, **dadurch gekennzeichnet, dass** die zweite Impulswiederholfrequenz ($f_2$) derart aus zumindest einer zweiten Frequenzmenge ($\{f\}_2$) mit zumindest einer weiteren Impulswiederholfrequenz ($f_{2i}$) ausgewählt ist, dass der Betrag der auf die Periodendauer $(1/f_2)$ bezogenen relativen Zeitdifferenz $|\tau_2 \cdot f_2|$ zwischen dem Referenzimpuls (7) und dem Messimpuls (6) grösser ist als die doppelte auf die Periodendauer $(1/f_2)$ bezogene relative Impulsbreite $|\Delta t\ f_2|$.

4. Algorithmus nach Anspruch 3, **dadurch gekennzeichnet, dass** bei einer zur Berechnung der Distanz (X) benutzten Anzahl (n) von Impulswiederholfrequenzen ($f_1...f_n$) mit k = 1 n je eine k-te Impulswiederholfrequenz ($f_k$) derart aus zumindest einer k-ten Frequenzmenge ($\{f\}_k$) mit zumindest einer weiteren Impulswiederholfrequenz ($f_{ki}$) ausgewählt ist, dass der Betrag der auf die Periodendauer ($1/f_k$) bezogenen relativen Zeitdifferenz $|\tau_k \cdot f_k|$ zwischen dem Referenzimpuls (7) und dem Messimpuls (6) grösser ist als die doppelte auf die Periodendauer ($1/f_k$) bezogene relative Impulsbreite $|\Delta t\, f_k|$.

5. Algorithmus nach Anspruch 2 bis 4, **dadurch gekennzeichnet, dass** der Betrag der auf die Periodendauer ($1/f_k$) bezogenen relativen Zeitdifferenz $|\tau_k \cdot f_k|$ zwischen dem Referenzimpuls (7) und dem Messimpuls (6) grösser ist als die fünffache auf die Periodendauer ($1/f_k$) bezogene relative Impulsbreite $|\Delta t\, f_k|$..

6. Algorithmus nach Anspruch 2 oder 5, **dadurch gekennzeichnet, dass** zumindest eine, optional alle Impulswiederholfrequenzen ($f_k$) derart ausgewählt werden, dass zudem der Betrag $|\tau_k \cdot f_k - 1/2|$ minimal ist

7. Algorithmus nach einem der Ansprüche 2 bis 6, **dadurch gekennzeichnet, dass** die einzelnen Impulswiederholfrequenzen ($f_{ik}$) in der Frequenzmenge ($\{f\}_k$) einzelne Glieder einer harmonischen Folge mit einem Folgenindex (i) darstellen.

**Claims**

1. Handheld laser distance-measuring device with an algorithm (3) controlling a microcontroller (2) for calculating the distance (X) to a measured object (4) from at least two distinct time differences ($\tau_1$, $\tau_2$), each measured with a pulse repetition frequency ($f_1$, $f_2$), between a measurement pulse (6) and a reference pulse (7) with a pulse width ($\Delta t$), the distance (X) being unambiguously determined by direct and unambiguous measurement of the time difference ($\tau_1$, $\tau_2$) between detection of the reference pulse (7) and detection of the measurement pulse (6), **characterized in that** a selection module (5) is provided which selects at least the first pulse repetition frequency ($f_1$), from a tested test-series of at least a first set of frequencies ($\{f\}_1$) with at least one further pulse repetition frequency ($f_{1i}$) in such a way that the value of the relative time difference $|\tau_1 - f_1|$ between the reference pulse (7) and the measurement pulse (6) related to the period ($1/f_1$) is more than twice the relative pulse width $|\Delta t\, f_1|$ related to the period ($1/f_1$).

2. Pulse inverse mixing method for a handheld laser distance-measuring device (1) for calculating the distance (X) to a measured object (4) with an algorithm (3), controlling a microcontroller (2), with a measurement step (9) for measuring at least two time differences ($\tau_1$, $\tau_2$), measured with different pulse repetition frequencies ($f_1$, $f_2$), between a measurement pulse (6) and a reference pulse (7) with a pulse width ($\Delta t$), and a subsequent calculation step (10) for calculating the distance (X) from the at least two time differences ($\tau_1$, $\tau_2$), the distance (X) being unambiguously determined by direct and unambiguous measurement of the time difference ($\tau_1$, $\tau_2$) between detection of the reference pulse (7) and detection of the measurement pulse (6), **characterized in that** in a selection step (11) of a selection module (5) executed between the measurement step (9) and the calculation step (10), at least the first pulse repetition frequency ($f_1$) is selected from a tested test-series of at least a first set of frequencies ($\{f\}_1$) with at least one further pulse repetition frequency ($f_{1i}$) in such a way that the value of the relative time difference $|\tau_1 \cdot f_1|$ between the reference pulse (7) and the measurement pulse (6) related to the period ($1/f_1$) is more than twice the relative pulse width $|\Delta t\, f_1|$ related to the period ($1/f_1$).

3. Algorithm according to Claim 2, **characterized in that** the second pulse repetition frequency ($f_2$) is selected from at least a second set of frequencies ($\{f\}_2$) with at least one further pulse repetition frequency ($f_{2i}$) in such a way that the value of the relative time difference $|\tau_2 \cdot f_2|$ between the reference pulse (7) and the measurement pulse (6) related to the period ($1/f_2$) is more than twice the relative pulse width $|\Delta t\, f_2|$ related to the period ($1/f_2$).

4. Algorithm according to Claim 3, **characterized in that** for a number (n) of pulse repetition frequencies ($f_1...f_n$) used for calculating the distance (X) where k = 1 ... n, each $k^{th}$ frequency ($f_k$) is selected from at least one $k^{th}$ set of frequencies ($\{f\}_k$) with at least one further pulse repetition frequency ($f_{ki}$) in such a way that the value of the relative time difference $|\tau_k \cdot f_k|$ between the reference pulse (7) and the measurement pulse (6) related to the period ($1/f_k$) is more than twice the relative pulse width $|\Delta t\, f_1|$ related to the period ($1/f_k$).

5. Algorithm according to Claims 2 to 4, **characterized in that** the value of the relative time difference $|\tau_k \cdot f_k|$ between the reference pulse (7) and the measurement pulse (6) related to the period ($1/f_k$) is more than five times the relative pulse width $|\Delta t\, f_k|$ related to the period ($1/f_k$).

6. Algorithm according to Claim 2 or Claim 5, **characterized in that** at least one and optionally all pulse repetition frequencies ($f_k$) are selected in such a way that the value $|\tau_k \cdot f_k - \frac{1}{2}|$ is moreover minimal.

7. Algorithm according to any one of Claims 2 to 6, **characterized in that** the individual pulse repetition frequencies ($f_{ik}$) in the frequency set ($\{f\}_k$) represent individual members of a harmonized sequence with a sequence index (i).

## Revendications

1. Appareil manuel de mesure de distances au laser, comprenant un algorithme (3) pilotant un micro-contrôleur (2) pour calculer la distance (X) à un objet de mesure (4) à l'aide d'au moins deux différences de temps différentes ($\tau_1$, $\tau_2$), mesurées chacune avec une fréquence de répétition d'impulsion ($f_1$, $f_2$), entre une impulsion de mesure (6) et une impulsion de référence (7) de largeur l'impulsion ($\Delta t$), la distance (X) étant calculée univoquement par mesure directe et univoque de la différence de temps ($\tau_1$, $\tau_2$) entre la détection de l'impulsion de référence (7) et la détection de l'impulsion de mesure (6), **caractérisé en ce qu'**il est prévu un mode de sélection (5) qui sélectionne au moins la première fréquence de répétition d'impulsion ($f_1$) parmi une série testée de tests d'au moins un premier ensemble de fréquences ($\{f\}_1$) possédant au moins une autre fréquence de répétition d'impulsion ($f_{1i}$), de façon que la valeur de la différence de temps relative $|\tau_1 \cdot f_1|$, rapportée à la durée de période ($1/f_1$), entre l'impulsion de référence (7) et l'impulsion de mesure (6) soit supérieure au double de la largeur d'impulsion relative $|\Delta t\, f_1|$ rapportée à la durée de période ($1/f_1$).

2. Procédé de rétromélange d'impulsions pour un appareil manuel de mesure de distances au laser (1) apte calculer la distance (X) à un objet de mesure (4), comprenant un algorithme (3) piloté par un micro-contrôleur (2) avec une étape de mesure (9) visant à mesurer au moins deux différences de temps ($\tau_1$, $\tau_2$), mesurée avec des fréquences de répétition d'impulsion différentes ($f_1$, $f_2$), entre une impulsion de mesure (6) et une impulsion de référence (7) de largeur d'impulsion ($\Delta t$), et avec une étape de calcul ultérieure (10) visant à calculer la distance (X) à partir des différences de temps ($\tau_1$, $\tau_2$) au nombre d'au moins deux, la distance (X) étant calculée univoquement par mesure directe et univoque de la différence de temps ($\tau_1$, $\tau_2$) entre la détection de l'impulsion de référence (7) et la détection de l'impulsion de mesure (6), **caractérisé en ce que**, dans une étape de sélection (11) d'un mode de sélection (5) située entre l'étape de mesure (9) et l'étape de calcul (10), au moins la première fréquence de répétition d'impulsion ($f_1$) est sélectionnée parmi une série testée de tests d'un premier ensemble de fréquences ($\{f\}_1$) possédant au moins une autre fréquence de répétition d'impulsion ($f_{1i}$), de façon que la valeur de la différence de temps relative $|\tau_1 \cdot f_1|$, rapportée la durée de période ($1/f_1$), entre l'impulsion de référence (7) et l'impulsion de mesure (6) soit supérieure au double de la largeur d'impulsion relative $|\Delta t\, f_1|$ rapportée à la durée de période ($1/f_1$).

3. Algorithme selon la revendication 2, **caractérisé en ce que** la seconde fréquence de répétition d'impulsion (f2) est sélectionnée parmi au moins un second ensemble de fréquences ($\{f\}_2$) possédant au moins une autre fréquence de répétition d'impulsion ($f_{2i}$), de façon que la valeur de la différence de temps $|\tau_2 \cdot f_2|$, rapportée à la durée de période ($1/f_2$), entre l'impulsion de référence (7) et l'impulsion de mesure (6) soit supérieure au double de la largeur d'impulsion relative $|\Delta t\, f_2|$ rapportée à la durée de période ($1/f_2$).

4. Algorithme selon la revendication 3, **caractérisé en ce que**, pour un nombre (n) de fréquences de répétition d'impulsion ($f_1...f_n$) utilisé pour calculer la distance (X), avec k = 1...n, une $k^{\text{éme}}$ fréquence de répétition d'impulsion ($f_k$) est sélectionnée chaque fois parmi un $k^{\text{éme}}$ ensemble de fréquences ($\{f\}_k$) avec au moins une autre fréquence de répétition d'impulsion ($f_{ki}$), de façon que la valeur de la différence de temps relative $|\tau_k \cdot f_k|$, rapportée à la durée de période ($1/f_k$), entre l'impulsion de référence (7) et l'impulsion de mesure (6) soit supérieure au double de la largeur d'impulsion relative $|\Delta t\, f_k|$ rapportée à la durée de période ($1/f_k$).

5. Algorithme selon les revendications 2 à 4, **caractérisé en ce que** la valeur de la différence de temps relative $|\tau_k \cdot f_k|$, rapportée à la durée de période ($1/f_k$), entre l'impulsion de référence (7) et l'impulsion de mesure (6) est supérieure au quintuple de la largeur d'impulsion relative $|\Delta t\, f_k|$ rapportée à la durée de période ($1/f_k$).

6. Algorithme selon la revendication 2 ou 5, **caractérisé en ce qu'**au moins une, optionnellement toutes les fréquences de répétition d'impulsion ($f_k$) sont sélectionnées de façon que, en plus, la valeur $|f_k \cdot f_k - 1/2|$ soit minimale.

7. Algorithme selon une des revendications 2 à 6, **caractérisé en ce que** les différentes fréquences de répétition d'impulsion ($f_{ik}$) de l'ensemble de fréquence ($\{f\}_k$) constituent les différents éléments d'une suite harmonique avec un indice de suite (i).

## Fig. 1

$$X$$

$$k=1,2,3$$
$$i=4,5,...$$

$$f_{ki} \implies \tau_{ki} \quad \underline{9}$$

$$|\tau_{ki}\, f_{ki}| >= A >= 5|\Delta t\, f_{ki}| \quad \underline{11}$$

n

y

$$\tau_k \implies X \quad \underline{10}$$

$$\underline{3}$$

$$\mu C \quad \underline{2}$$

$$\underline{4}$$

$$1$$

$$\underline{5}$$

## Fig. 2

$$\tau$$

$$1/f$$

7

6

$$\Delta t$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 610918 B1
- DE 3103567 C2
- DE 10112833 C1